(19) Europäisches Patentamt / European Patent Office / Office européen des brevets

(11) **EP 2 625 753 B1**

(12) **EUROPEAN PATENT SPECIFICATION**

(45) Date of publication and mention
of the grant of the patent:
**20.11.2019 Bulletin 2019/47**

(51) Int Cl.:
*H01S 3/067* *(2006.01)*　　*H01S 3/094* *(2006.01)*
*H01S 3/16* *(2006.01)*　　*H01S 3/00* *(2006.01)*
*H01S 3/10* *(2006.01)*

(21) Application number: **10858239.6**

(22) Date of filing: **07.10.2010**

(86) International application number:
**PCT/US2010/051743**

(87) International publication number:
**WO 2012/047218 (12.04.2012 Gazette 2012/15)**

(54) **HIGH POWER NEODYMIUM FIBER LASERS AND AMPLIFIERS**

HOCHLEISTUNGS-NEODYMFASERLASER UND VERSTÄRKER

LASERS ET AMPLIFICATEURS À FIBRE DOPÉE AU NÉODYME DE FORTE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.08.2013 Bulletin 2013/33**

(73) Proprietor: **IPG Photonics Corporation
Oxford, Massachusetts 01540 (US)**

(72) Inventors:
• **GASPONTSEV, Valentin
  Oxford, MA 01540 (US)**
• **ZAYTSEV, Illia
  Oxford, MA 01540 (US)**
• **VYATKIN, Mikhail
  Oxford, MA 01540 (US)**

(74) Representative: **Kohlmann, Kai
  Donatusstrasse 1
  52078 Aachen (DE)**

(56) References cited:
**WO-A1-95/10868　　US-A- 5 530 710
US-A1- 2004 196 537　　US-A1- 2006 029 111
US-A1- 2009 080 835　　US-A1- 2009 080 835
US-A1- 2009 092 157**

**Description**

**BACKGROUND OF THE DISCLOSURE**

Field of the Disclosure

The disclosure relates to high power fiber laser systems ("HPFLS") operative to emit radiation at main and parasitic wavelengths. More particular, the disclosure relates to 1. a gain block with Nd-doped fibers operative to generate/amplify radiation at the desired wavelength while limiting gain at a parasitic wavelength, and 2. the gain block's applications.

Discussion of the Prior Art

Development and power scaling of fiber laser systems emitting light in a 880-960 nm luminescence range have been recently intensified because these systems find a variety of industrial applications. For example, such systems may function as a powerful pump for Yb-doped fiber laser. Alternatively, these fiber laser systems are used for realization of second harmonic generation - a nonlinear optical process associated with the generation of the double frequency and, therefore, half the wavelength, i.e., 450-470 nm. The laser systems operating in this range are known as "blue" lasers.

It's well-known that $^4F_{3/2}$-$^4I_{9/2}$ transition of neodymium ion corresponding to a 880-960 nm luminescence spectral range terminates at the ground state. Therefore, the signal in this spectral range is subjected to the ground state absorption, and as a result high population inversion is required to achieve a reasonable gain in this spectral range leading to extremely high gain around a parasitic 1060 nm wavelength. Two most common approaches have been traditionally used to solve this problem.

One of the known approaches is based on reducing the concentration of active ions in fiber and the length of active fiber. Implementation of this approach usually requires the use of fibers with very large core diameters for efficient absorption of pump radiation. This in turn entails the substantial increase in gain of the higher order modes. It should be noted that effects of high parasitic gain in 1060nm range and growth of higher order modes amplification are superimposed on each other and lead to catastrophic growth of gain for higher order modes at 1060nm. This limitation may be overcome by reducing the core/cladding refractive index difference and inducing bend losses for higher order and even fundamental modes in the long-wavelength spectral range.

Another widely used in practice approach is based on the suppression of the fundamental mode of active fiber in the long-wavelength range through the use of w-profile active fiber. Typically, this approach requires the use of very small core diameters of the active fiber. This entails the use of high concentration of active ions necessary to have reasonable pump absorption and, as a consequence, the high parasitic gain in 1060nm spectral range that can reach hundreds of dB. It means that the suppression in a w-profile active fiber should exceed hundreds of dB, which is extremely difficult to implement or monitor. Besides, such a high concentration of neodymium ions would result in reduction of pump conversion efficiency. In addition to that compression of mode field diameter corresponding to a small core diameter would lower the threshold of nonlinear phenomena. All of the above mentioned reasons hinder the realization of high-performance and high-power neodymium fiber laser in the 900nm range.

In summary, the gain block based on a Nd-doped fiber is characterized by amplification at respective signal and parasitic wavelengths. The gain at parasitic wavelengths in a 1060 nm range at the desired value of the gain at signal wavelength in a 900nm range is a function of the overall length of the Nd-doped fiber and concentration of active ions. Typically, with the increase of fiber length and concentration, the gain in the parasitic range increases and the gain in the working wavelength range decreases.

The pump absorption in gain blocks in a Nd-doped fiber is also proportional to the length of the Nd-doped fiber and concentration of active ions. Thus, increasing pump absorption by having the greater length and higher Nd ions concentration inevitably leads to the growth of parasitic amplification and the decrease of gain at the working wavelength. An optical fiber amplifier having a double bottleneck-shaped cross-section and being laterally pumped by a passive fiber having a half dumbbell-shaped cross-section attached to the active fiber is known from US2004/0196537 A1.

A need therefore exists for a gain block based on a Nd-doped fiber and a method for manufacturing the block in which the pump light absorption is improved without the necessity for the increased dopant concentration and the increased active fiber length.

Another need exists for a high performance and high-power fiber laser system provided with the neodymium fiber gain block.

Still a further need exists for a fiber laser system based on the neodymium-doped fiber gain block for generating a second or higher harmonic of the gain block's radiation.

**SUMMARY OF THE DISCLOSURE**

The object of the present invention is fulfilled by a system and a method as defined in independent claims 1,16. Preferred embodiments are defined in the dependent claims.

The configuration of the disclosed Nd-doped gain block and applications of the block in various inventive optical schemes satisfy these needs. The disclosed gain block is configured with a side-pumping ("SP") configuration which includes a fixed-length of Nd-doped active fiber and a passive pump delivery fiber optically coupled to each other along respective opposing sides. The SP configuration is structured with a high-ratio between the core area Ac of the active fiber to the overall pump guiding clad area Aclad of the absorption region. As known, the greater the ratio, the higher the pump light absorption. Accordingly the configurations of respective active and delivery fibers provide for a highly efficient absorption of pump light and high gain at the desired wavelength in a 900nm range. At the same time, the parasitic gain in 1060nm range does not exceed a reasonable threshold.

In particular, at least one of elongated pump delivery and active fibers is configured with an axial cross-section which has a variable diameter. One of the configurations of the disclosed block includes the active fiber with a double bottleneck shape defined by two spaced small-area end regions and a large-area central region, whereas the delivery fiber has a dumbbell shape with a small-area central region extending between opposite large-area end regions. The other configuration includes either active or pump delivery fiber having a variable diameter along the axis, whereas the other fiber remains with a cylindrically-shaped cross-section. The commonality of all of the disclosed configurations includes a structure in which the central regions of the respective fibers are configured with a ratio between the core area and total clad area selected so as to allow for an increased pump light absorption rate. At the same time, the active fiber is configured with a shortest possible length that limits the gain at the parasitic wavelength to a preset, reasonable value. Thus the disclosed gain block and method for manufacturing the same, unlike the above-discussed techniques, do not necessitate greater fiber lengths and higher concentration for improving the pump-light absorption.

However, even with the increased ratio between the core and total clad areas, a portion of pump light is typically remains unabsorbed and therefore underutilized. The latter of course decreases the efficiency of the gain block. Hence, the disclosed pumping arrangement is configured so that the unabsorbed pump light is utilized after the initial pass thereof through the central absorption region of the core. One of the disclosed pumping arrangements is configured so as to return the unabsorbed light back to the same absorption region but in a direction opposite to the initial one. The other configuration provides for guiding the unabsorbed pump light to a neighboring gain block where it is used for pumping.

## BRIEF DESCRIPTION OF THE DRAWINGS

The above and other features and advantages will become more readily apparent from the following specific description accompanied by the drawings, in which

FIG. 1 is a schematic view of the disclosed fiber block.

FIG. 2 is one configuration of the SP arrangement of the fiber block of FIG. 1;

FIG. 3 is a modified configuration of the active fiber of fiber block of FIG. 1.

FIG. 4 is a further configuration of the SP arrangement of the block of FIG. 1

FIG. 4A is a schematic view of another configuration of the fiber block of FIG. 4.

FIG. 4B is a view of still another configuration of the fiber block of FIG. 4;

FIG. 5 is a schematic view of the disclosed in-line fiber laser system configured with the fiber gain block of FIG. 1.

FIG. 6 is a schematic view of another configuration of the disclosed high power laser system configured with the fiber block of FIG. 1.

FIG. 7 is a spectrum of the output signal of the laser systems of FIGS. 5 and 6.

FIG. 8 is a schematic of a blue laser configured with the disclosed fiber block of FIGS. 1-4.

FIG. 9 is a diagrammatic view of a high power fiber laser system having a pump configured with the fiber block of FIGS. 1-4.

## SPECIFIC DESCRIPTION

Reference will now be made in detail to several embodiments of the invention that are illustrated in the accompanying drawings. Wherever possible, same or similar reference numerals are used in the drawings and the description to refer to the same or like parts or steps. The drawings are in simplified form and are not to precise scale. The words "couple", "operatively connected" and similar terms do not necessarily denote direct and immediate connections, but also include connections through intermediate elements or devices.

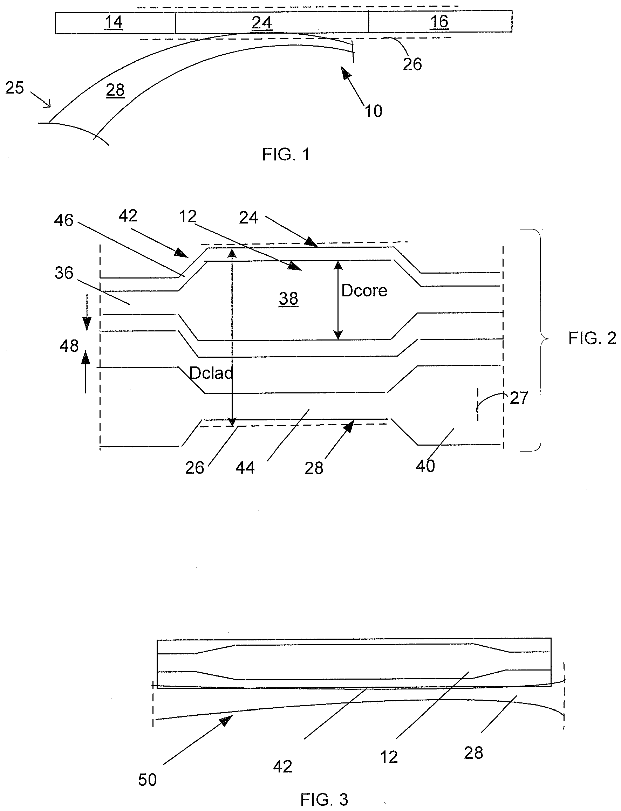

FIG. 1 schematically shows a fiber block 10 configured as a fiber amplifier or fiber laser and including a complex waveguide. The waveguide is structured, for example, with a multi-mode (MM), multi-clad active fiber 24. The fiber block 10 further includes input and output passive single mode (SM) fibers 14 and 16 which are butt-spliced to respective opposite ends of active fiber 24. A pump 25, configured with one or more light sources, is operative to radiate pump light coupled into a coreless MM pump-light delivery passive fiber 28 which has a stretch operatively thermo-mechanically coupled to a stretch of active fiber 24 so that the coupled stretches define a coupling region of the complex waveguide. The pump light is launched into active fiber 24 and at least partially absorbed by gain medium of the fiber's doped core along the coupling region. If necessary, the connected fibers may be pulled away from one another in response to external forces applied thereto. The Nd ions are introduced into the active fiber's core at a given concentration providing for the desired gain in a 900 nm wavelength range and reasonable gain in a 1060 nm range.

A polymeric coating 26 surrounds fibers 24 and 28 and is operatively connected thereto along substantially the entire coupling region. The fibers 24 and 28, respectively, in combination with coating 26 are the essential components of the SP configuration.

FIG. 2 illustrates one aspect of the disclosed geometry of respective active 24 and pump-light delivering passive 28 fibers of fiber block 10. The core 12 of active fiber 24 may be surrounded by multiple claddings 42 (only one is shown) coextending with the core. The geometry of active fiber 24, i.e. the cross-sections of respective core 12 and cladding 42 along the longitudinal fiber axis, has a double bottleneck-shaped cross-section. The latter includes a narrowly-dimensioned input end region 36, uniformly dimensioned absorption central or mid-region 38, which has an area Acore larger than that one of the input region, and a frustoconical input transformer region 46 bridging the end and mid core regions. To complete the double bottleneck section, core 12 further has output frustoconical transformer and end regions. The core 12 may support a single transverse mode or multiple modes.

While core area Acore of core's absorption region 38 is increased, the area of a central or mid-region 44 of delivery, coreless fiber 28, and consequently overall clad area Aclad are decreased. Generally, the cross-section of delivery fiber 28 is further referred to as a dumbbell-shaped cross-section implying any shape characterized by a relatively small-area central region and relatively large-area end regions. The increasing and decreasing coefficients of the respective fibers are not arbitrary. The coefficients are so selected that the total clad area of the central regions is preferably the same as the total clad area of the input end of the entire SP structure of FIG. 2. The latter allows the power density of pump light and therefore the numerical aperture of the latter remain unchanged; otherwise, the structure would have increased pump light losses.

In general, the determination of the decreasing coefficient of delivery fiber 28, provided that the latter maintains a relatively small aperture, is based on the fact that the reduction of a clad area of fiber causes the numerical aperture NAaf of this fiber to increase. Assuming, for example, that delivery fiber 28 maintains a NApump of 0.1, i.e a NA of pump emission by a laser diode or laser diodes' combiner coupled into the pump delivery fiber, and fiber 24 has a

$$NA = [\sqrt{n\text{clad}^2 - n\text{coat}^2}]^2 = 0.4,$$ where $n_{clad}$

and $n_{coat}$ are respective indices of cladding and coating. Then, a maximum coefficient k at which the overall clad area may be reduced without substantial pump light losses is $$k = [\frac{Naf}{Ndel}]^2 = [\frac{0.4}{0.1}]^2 = 16.$$

In certain situations it is desirable that gain or fiber block 10 would emit not only powerful radiation in the desired 900 nm range while limiting the gain in the 1060 nm range, but also it would output the radiation that may approximately have the desired number of modes. Often, high quality light radiated by a fiber laser system requires very few or even substantially single, preferably, fundamental mode. The excitation of substantially only fundamental or very few modes occurs if mode field diameters (MFD) of respective SM passive fibers 14, 16 and fundamental mode supported by core 12, which in this case has a MM configuration, to a large extent match one another. Accordingly, the opposite ends of active fiber 24 are configured so as to allow a SM mode supported by input fiber 14 to excite substantially a fundamental or very few modes in MM core 12 as the SM propagates through the splice region between these fibers.

FIG. 3 illustrates the modification of the SP structure of FIG. 2 providing for the enhanced absorption of pump light per length unit so as to emit radiation with the desired gain at the working wavelength in the 900 nm range while limiting an unacceptable gain at parasitic wavelength around 1060 nm. The active fiber 50 is configured with a uniform, not enlarged cladding diameter 42; the core 12, however, has a bottleneck or double bottleneck-shaped cross-section. A pump-light delivery coreless MM passive fiber is shown with a reduced area along the coupling region. Accordingly, the ratio between the area Acore of core 12 and the overall cladding area Aclad, which is a sum of cladding areas of respective active, passive and sleeve fibers, is relatively high, and the absorption at the desired wavelength is enhanced.

Typically, not all pump light is absorbed by the gain medium of the active fiber's core. In a configuration in which the pump light is coupled initially only into the input end region of active fiber 24, the area of the output end region of passive delivery fiber 28 is configured to be N times larger than the area of the output region of active fiber 24. The above disclosed relationship between the areas of respective active and passive fibers allows the unabsorbed light at the end of the coupling regions to be distributed between active and passive. The passive delivery fiber 28, thus would have the N times more of the unabsorbed pump light than the output end of active fiber 24. Preferably, the area of the output end region of delivery fiber 28 is about 7 to about 10 times greater that that one of fiber 24. Structurally, the opposite input and output ends of the delivery fiber may be uniformly shaped and dimensioned or not uniformly. Similarly, the opposite small-area end regions of the active fiber may or may not be uniformly configured.

The unabsorbed pump light coupled into passive fiber 28 maybe reused for pumping the next gain block, as disclosed below. Alternatively, the remaining pump light can be reflected back by a reflector 27 for pumping active fiber 24 in the opposite direction. The reflector 27 may be configured as fiber mirror, bulk mirror or others.

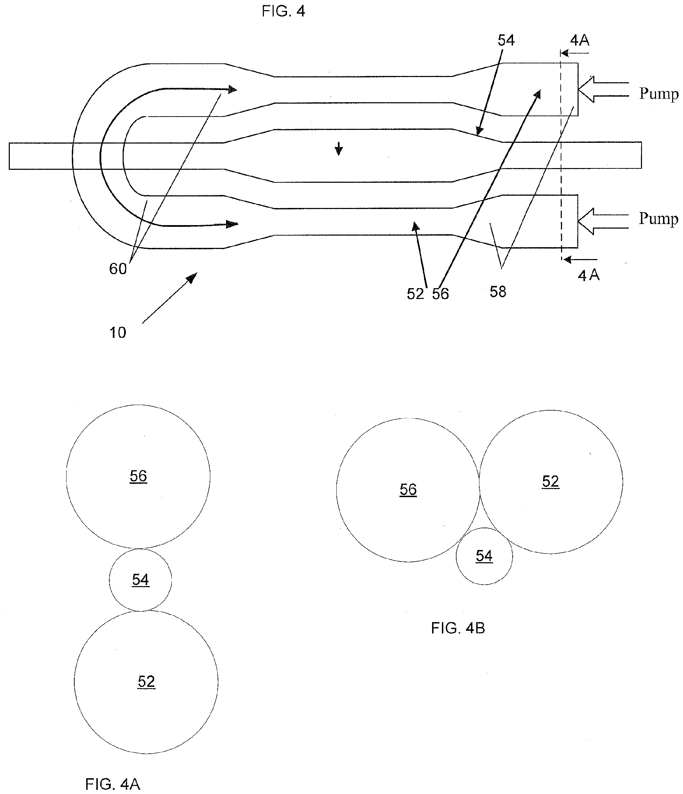

FIG. 4 illustrates a further modification of the SP configuration of gain block 10 configured with two passive fibers 52, 56 which flank an active fiber 54. The active fiber 54 has a MM core doped with a gain medium, such as Nd dopants, capable of generating/amplifying radiation at the desired and parasitic wavelengths. The pump light may be coupled into both passive fibers 52 and 56, respectively, in the same direction, which is preferably opposite to the forward-propagating direction of a signal light. The geometry of passive fibers 52, 56 corresponds to the geometry of delivery passive fiber 28 of FIG. 2 and, thus, has a dumbbell-shaped cross-section. Alternatively, a single passive fiber arranged in a U-shaped form may be used with multiple spaced small-area central regions extending along the central region of active fiber 54. The configuration of active fiber 54 may be one those shown in FIGS. 2 and 3. The architecture of the SP configuration of FIG. 4 may have all three fibers aligned in a plane transverse to the longitudinal axes of respective fibers, as shown in FIG. 4A. Alternatively, the fibers may be positioned to define a triangular shape of FIG. 4B in the transverse plane. The fibers have respective coextending longitudinal central regions coupled to one another.

The passive delivery fibers 52, 56, respectively, have their distal ends, which are spaced from the respective pumps together, fused which allows the pump light unabsorbed during a first pass of this light, for example, from passive fiber 52 to passive fiber 56, to be further absorbed during the pass in the opposite direction from fiber 56 to fiber 52. Accordingly, the absorption of the pump light is greatly enhanced in the illustrated configuration. Preferably the distal ends of respective passive fibers are fused in the vicinity of the core end region spaced from the input end regions of the respective delivery fibers.

In summary, all of the above disclosed embodiments can be illustrated by the following example. Suppose a gain block is configured with a fiber having the core which is doped with Nd ions at a certain concentration PPMx. The gain block is required to produce a 5 dB gain at a 920 nm wavelength, but not to have gain at the parasitic wavelength higher than 30 dB. Knowing the dopant concentration and target gain at both working and parasitic wavelengths, the overall minimally possible length of the Nd fiber should not exceed 30/PPMx. Having determined the minimal possible length of the ND-doped fiber limiting the preset gain at the parasitic wavelength, it is necessary now to provide for a maximum absorption rate along the determined length in order to have the 5 dB gain at 920 nm wavelength.

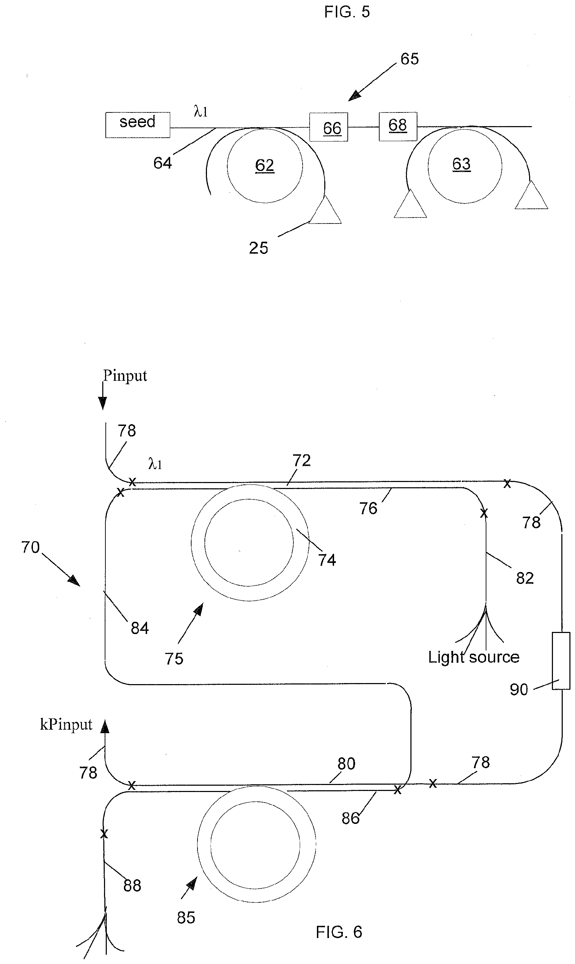

FIG. 5 illustrates a high power in-line fiber laser system 65 having a typical MOPA configuration. The system 65 includes a seed source outputting a signal at the desired wavelength $\lambda 1$ at, for example, 918 nm which is coupled into a passive fiber 64 delivering this light to a Nd-doped active fiber 62. A pump 25 may include one or multiple laser diodes generating pump light at, for example, a 808 nm wavelength, which is coupled into an active fiber 62 of booster gain block 63.

The preamplifier 62 configured in accordance with one of the above disclosed embodiments provides gain for a light signal at the desired 918 nm and parasitic 1060 nm wavelength. The light signal is coupled into a filter component 66 operative to discriminate between the parasitic and main frequencies by filtering out the parasitic frequencies. The filter 66 may be selected from a passive fiber provided with long-period or slanted fiber grating, a passive fiber with an increased concentration of samarium $(Sm^{3+})$ or other similarly functioning dopants known to one of ordinary skilled in the art, passive fiber with a W refractive index profile or bulk optics. The filtered light is further coupled into an isolator 68 configured to prevent back reflected radiation from propagating towards the upstream optical components.

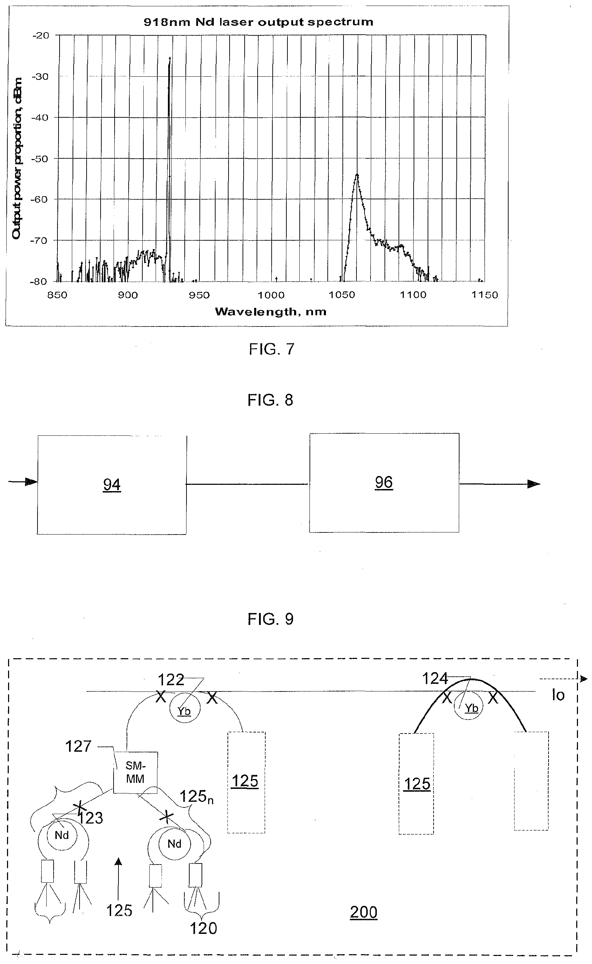

Finally, the light is coupled into a booster stage including gain block 63 which is also configured in accordance with the above disclosed modification of the SP structure. The booster stage is pumped by the laser diodes. All passive and active fibers are butt spliced to one another and configured with respective MFDs which substantially match one another. The system 65 has been tested and exhibited the maximum output power of more than 102W in a 900nm range with $M^2 \sim 1.05$ at 181W pump power level. FIG. 8 illustrates the output spectrum of laser system 65 clearly showing a substantially amplified light in the desired wavelength and limited amplification of the light signal in the parasitic wavelength range.

FIG. 6 illustrates the configuration of each of the multiple cascades of high power fiber laser system 70 provided with gain blocks which are disclosed above. The configuration of system 70 illustrates efficient use of pump light remaining in the passive pump-delivery fiber of one amplifying stage for additional pumping of the active fiber of the following amplification stage.

A SM passive fiber 78 supports the propagation of a signal at the desired wavelength $\lambda_1$ and delivers the light to a double clad, MM Nd-doped fiber 74 of an upstream gain block 75 having a double bottleneck shape. The signal light at a parasitic frequency is further filtered out as the amplified signal light propagates along passive SM fiber 78 through filter 90 configured similarly to filter 66 of FIG. 5. Finally, the amplified light at the desired frequency propagates through another SM passive fiber 78 and is coupled into a double-clad MM Nd-doped fiber 80 of adjacent gain block 85 where it is further amplified so as to emit the radiation in the desired wavelength range at kPinput, wherein k is a gain coefficient.

A pumping assembly includes a plurality of light sources having respective outputs combined into a coupler 82 which is fused to one end of a MM coreless pump-light delivery fiber 76 supporting the propagation of pump light in a direction opposite to that one of the signal. The pump light is coupled only into one side of the SP configuration, and the portion of this light, which remains in delivery fiber 72, is further coupled into a MM passive fiber 84. Eventually, the remaining pump light is coupled into a MM pump-light coreless delivery fiber 86 of downstream gain block 85.

The gain block 85 has its own pump arrangement with one or more laser diodes having respective outputs combined into a coupler 88 which is fused to pump-light delivery fiber 86. As a result, the pump light is coupled into the cladding of active fiber 80 of block 85 in a direction opposite to the direction of the pump light which is delivered from gain block 75. The pump light remaining in pump-light delivery fiber 86 is further guided towards upstream gain block 75 where it is launched into the cladding of active fiber 72 and further crosses the core of active fiber 72 so as to be absorbed. Thus, the pump light arrangement allows the pump light, remaining at the output of each of the pump-light delivering fibers, to propagate towards the other delivering fiber for additional pumping of the active fiber.

FIG. 7 illustrates a "blue" fiber laser system. Illustrated diagrammatically, the system includes a gain block 94 configured in accordance with the present disclosure and including a Nd-doped cladding-pumped active fiber and MM pump-light delivery fiber. As in all of the above-disclosed modifications, gain block 94 may be configured as a laser or amplifier operative to output laser light at the desired wavelength in a 900 nm range. The output light is coupled into a second or higher order harmonic generator 96 operative to double the frequency of the coupled light and emit the output radiation at a wavelength ranging between about 450 nm and about 470 nm.

FIG. 9 illustrates a powerful fiber laser system 115 provided with multiple gain blocks each based on an multimode multiclad fiber 110, 112, and further has multiple pumping assemblies 125. Each pumping assembly 125 has a plurality of channels $125_{1-n}$ each configured with, preferably, a SM Nd fiber laser 123 which is pumped by a respective array of laser diodes 120. The Nd fiber laser 123 is configured in accordance with the optical schemes of FIGS. 2-6. Preferably a plurality of SM Nd lasers 123 is combined by a SM-MM combiner 127. The Nd fiber lasers 123 each generate an optical output at a wavelength of about 900-940 nm. The output of the SM-MM combiner 127 are coupled to respective inputs of Yb fiber laser block 122, 124 lasing an optical output Io at a wavelength of about 970-1000 nm or longer depending on gratings which are written in respective passive fibers defining a resonant cavity which receives a gain block. The closeness of the pump emission wavelength of Nd lasers in the desired 900 nm range to that one of Yb output leads to a substantially decreased heat generation.

A process of manufacturing respective active and delivery fibers 24, 28 of FIG. 2 includes simultaneous withdrawal of the fibers from respective preforms. The speed at which the fibers each are withdrawn is strictly controlled to receive the desired area enlargement and reduction of respective central regions of fibers 24, 28 and is not uniform. Furthermore, respective speeds at which fibers 24, 28 are withdrawn are not the same. As the fibers 24, 28, respectively, are modified, each pair of enlarged and reduced area central regions of the respective fibers are removably attached to one another so it is easy separate them by applying an insignificant force.

## Claims

1. A fiber laser system comprising at least one waveguide configured with:

   - an active Nd-doped fiber(24) and a coreless passive pump delivery fiber (28) optically connected to one another and extending along substantially parallel axis, the active and passive fibers (24, 28) having respective axially extending central regions (38, 44), which are coupled to one another to define a structure wherin the active fiber (24) is provided with a core (12) configured with an axial double bottleneck- shaped cross-section, the double bottleneck-shaped cross-section having the core central region (38) flanked by core end regions (36), wherein an area of the core central region (38) is larger than an area of the core end regions (36),
   - and the passive pump delivery fiber (28) having an axial dumbbell-shaped cross-section, wherein the dumbbell-shaped cross-section has the central region (44) and spaced end regions (40) which flank the central region (44), the central region (44) of the passive pump delivery (28) fiber being configured with an area smaller than an area of the spaced end regions (40),
   - the central regions (38, 44) of the respective active and passive pump delivery fibers (24, 28) being configured to provide for such a pump light absorption rate in a portion of the core (12) extending along the central region (38) of the active fiber (24) that the latter has a shortest possible length which allows for a desired gain of signal light at a working wavelength while limiting a gain of the signal light at a parasitic wavelength to a preset threshold, wherein the Nd ion are introduced into the core (12) at a given concentration selected to provide the active fiber (24) with the desired gain at the working wavelength and the preset gain at the parasitic wavelength,
   - wherein the fiber laser system further comprises a protective fiber coating (26) surrounding the central regions (38, 44) of respective active and passive pump delivery fibers (24, 28),
- and wherein a maximum coefficient k at which a total clad area of the central regions (38, 44) of the respective active and passive pump delivery fibers (24, 28) may be reduced is k= $[NA_{af}/NA_{pump}]^2$ wherein $NA_{af} = [\sqrt{n_{clad}^2 - n_{coat}^2}]^2$ is a numerical aperture of the active fiber (24) with $n_{clad}$ and $n_{coat}$ being respective indices of refraction of cladding (42) and coating (26) of the active fiber (24), and $NA_{pump}$ is a numerical aperture of pump emission.

2. The fiber laser system of claim 1, wherein an output end region of the pump delivery fiber is configured to contain N times more of an unabsorbed pump light than an output end region of the active fiber, the N being a ratio between an area of an output end region of the pump delivery fiber to a clad area of an output end region of the active fiber.

3. The fiber laser of claim 2 further comprising a reflective component coupled to the output end region of the pump delivery fiber, and a pump unit radiating the pump light coupled into an input end of the pump delivery fiber, wherein the reflective component is configured to backreflect the pump light, unabsorbed along the shortest possible length of the active fiber, towards the input end region of the pump delivery fiber so as to re-launch the unabsorbed pump light into the central region of the active fiber.

4. The fiber laser system of claim 1, wherein the total clad area of the central regions and a total area of input end regions of respective active and pump delivery fibers substantially equal to one another.

5. The fiber laser system of claim 1 further comprising another pump delivery dumbbell- shaped fiber configured substantially identically to the one pump delivery fiber and located so that the central reduced-areas of the respective one and other pump delivery fibers axially coextend with the central core portion of the active fiber and are aligned with the central portion in a plane which extends transversely to the axis of symmetry.

6. The fiber laser system of claim 5 further comprising a pump light source radiating the pump light which is coupled into an input end of region of the pump delivery fibers, output regions of respective pump delivery fibers being fused to one another in a vicinity of an end of the central core region axially spaced from the input end of the one pump delivery fiber, wherein the fused pump delivery fibers define a U-shaped configuration.

7. The fiber laser of claim 5, wherein the pump light source has two pump units each radiating the pump light, the radiated pump lights being coupled into respective input regions of the U-shaped pump delivery fiber so as to propagate in opposite directions.

8. The fiber laser system of claim 1 further comprising another pump delivery dumbbell-shaped fiber configured substantially identically to the one pump delivery fiber and located so that the central small-area central regions of respective pump delivery fibers axially coextend with the enlarged area central core portion of the active fiber, respective active and pump delivery fibers defining a triangular configuration in a plane which extends transversely to the axis

9. The fiber laser system of claim 1 further comprising an other waveguide configured similarly to the one waveguide, output end and input end regions of respective active fibers of the one and other waveguides being optically coupled to one another and output end regions of respective pump delivery fibers being optically coupled to one another so that an unabsorbed pump light remaining in the output region of the pump delivery fiber of the one waveguide is guided to the input end region of the pump delivery fiber of the other waveguide which launches the received unabsorbed pump light into a central enlarged-area core portion of the active fiber of the other waveguide.

10. The fiber laser system of claim 9 further comprising:

   - a light source generating the pump light which is coupled into the pump delivery fiber of the one waveguide, and
   - a reflective component located along an output end region of the pump delivery fiber of the other waveguide and operative to backreflect unabsorbed pump light remaining in the output region of the pump delivery fiber of the other waveguide.

11. The fiber laser system of claim 9 further comprising two light sources generating respective pump lights coupled into respective pump delivery fibers of the one and other waveguides, wherein the unabsorbed pump light in remaining in the output region of one of the waveguides is operatively coupled into the input end of the pump delivery fiber of the other waveguide for launching the received unabsorbed pump light into the active fiber of the other waveguide.

12. The fiber laser system of claim 11 further comprising:

   - an optical filter located between the output and input end regions of respective active fibers of the one and other waveguides, and
   - an optical waveguide guiding the signal light between the output and input end regions the respective active fibers through the optical filter which is configured to transmit the signal light at the working wavelength between the waveguides and substantially block further propagation of the signal light at the parasitic wavelength.

13. The fiber laser system of claim 12, wherein the optical filter is selected from the group consisting of a long-period fiber grating, slanted fiber grating, fiber with an increased concentration of samarium ($Sm^{3+}$), fiber with a W refractive index profile and bulk optics and a combination of these.

14. The fiber laser system of claim 1 further comprising a gain block provided with an active Yb-doped fiber, wherein the signal light radiated from the active fiber of the waveguide is used for pumping the active Yb-doped fiber of the gain block.

15. The fiber laser system of claim 1 further comprising a nonlinear crystal receiving the signal light from the active fiber of the waveguide and operative to double a frequency thereof so as to output light predominately in a 450-470 nm range.

16. A method of configuring a fiber laser system of claim 1, comprising:

> (a) drawing an active fiber (24) having a core (12), which is doped with a Nd-ion concentration, and a cladding (42) surrounding the core (12);
> (b) simultaneously with (a) drawing a coreless passive pump delivery fiber (28);
> (d) simultaneously with (a) and (b) selectively coupling central stretches of respective active and passive pump delivery fibers (24, 28) to one another thereby defining a structure consisting of:
>
> > - the active fiber (24) with the core (12) configured with a double bottleneck-shaped axial cross-section, the double bottleneck-shaped cross-section having a core central region (38) flanked by core end regions (36), wherein an area of the core central regions (38) is larger than an area of the core end regions (36),
> > - and the passive pump delivery fiber (24, 28) having an axial dumbbell-shaped cross-section, wherein the dumbbell-shaped cross-section has a central region (44) and spaced end regions (40) which flank the central region (44), the central region (44) of the passive pump delivery fiber (28) being configured with an area smaller than an area of the spaced end regions (40),

> - wherein a ratio between the area of the central core (38) region and a total clad area of coupled stretches of the respective fibers (24, 28) provide the active fiber, for the Nd-ion concentration, allows for a shortest possible length of the active fiber (24) which provides a desired gain of signal light at a working wavelength and limits a gain of the signal light at a parasitic wavelength to a preset threshold,
> - further comprising the steps:
> providing a protective fiber sleeve (26) over claddings (42) of respective active and passive pump delivery fibers (24, 28) along at least the coupled stretches, wherein drawing the fibers includes reducing a total clad area of the central regions (38, 44) of the respective active and passive pump delivery fibers (24, 28) at a maximum coefficient $k = [NA_{af}/NA_{pump}]^2$ wherein $NA_{af} = [\sqrt{n_{clad}^2 - n_{coat}^2}]^2$ is a numerical aperture of the active fiber with $n_{clad}$ and $n_{coat}$ being respective indices of refraction of cladding and coating of the active fiber, and $NA_{pump}$ is a numerical aperture of pump emission.

17. The method of claim 16, wherein drawing the fibers further includes

> - providing one of opposite end regions of the pump-light delivery fiber with an area larger than an area of coextending end region of the active fiber, thereby collecting a larger portion of the pump light, which is not absorbed in the central core region, in the one end region of the pump delivery fiber, and
> - either coupling a reflective component to the one end region of the pump-light delivery fiber thereby guiding the unabsorbed large portion of the pump light back to the other end region of the pump delivery fiber so as to re-pump the central core region; or guiding the unabsorbed large portion of the pump light towards an input end region of an additional pump delivery fiber which is spaced from and structured identically to the one pump delivery fiber, wherein the additional pump delivery fiber launches the unabsorbed pump light into a central core region of an additional active fiber configured identically to the one active fiber.

**Patentansprüche**

1. Faserlasersystem, das mindestens einen Wellenleiter umfasst, der konfiguriert ist mit:

> - einer aktiven Nd-dotierten Faser (24) und einer kernlosen passiven Pumpleitfaser (28), die optisch miteinander verbunden sind und sich entlang im Wesentlichen paralleler Achsen erstrecken, wobei die aktiven und passiven Fasern (24, 28) jeweilige sich axial erstreckende Mittelbereiche (38, 44) aufweisen, die miteinander gekoppelt sind, um eine Struktur zu definieren, wobei die aktive Faser (24) mit einem Kern (12) bereitgestellt ist, der mit einem axialen doppelflaschenhalsförmigen Querschnitt konfiguriert ist, wobei der doppelflaschenhalsförmige Querschnitt den Kernmittelbereich (38) aufweist, der von Kernendbereichen (36) flankiert ist, wobei eine Fläche des Kernmittelbereichs (38) größer als eine Fläche der Kernendbereiche (36) ist,
- und der passiven Pumpleitfaser (28), die einen axialen hantelförmigen Querschnitt aufweist, wobei der hantelförmige Querschnitt den Mittelbereich (44) und beabstandete Endbereiche (40) aufweist, die den Mittelbereich (44) flankieren, wobei der Mittelbereich (44) der passiven Pumpleit- (28) -faser mit einer Fläche konfiguriert ist, die kleiner als eine Fläche der beabstandeten Endbereiche (40) ist,
- den Mittelbereichen (38, 44) der jeweiligen aktiven und passiven Pumpleitfasern (24, 28), die konfiguriert sind, solch eine Pumplichtabsorptionsrate in einem Abschnitt des Kerns (12), der sich entlang des Mittelbereichs (38) der aktiven Faser (24) erstreckt, bereitzustellen, dass letztere eine kürzest mögliche Länge hat, die eine gewünschte Verstärkung von Signallicht bei einer Arbeitswellenlänge erlaubt, während eine Verstärkung des Signallichts bei einer parasitären Wellenlänge auf einen voreingestellten Schwellenwert begrenzt wird, wobei die Nd-Ionen in den Kern (12) bei einer gegebenen Konzentration eingeführt werden, die ausgewählt ist, die aktive Faser (24) mit der gewünschten Verstärkung bei der Arbeitslänge und der voreingestellten Verstärkung bei der parasitären Wellenlänge bereitzustellen,
- wobei das Faserlasersystem weiter eine schützende Faserbeschichtung (26) umfasst, die die Mittelbereiche (38, 44) jeweiliger aktiver und passiver Pumpleitfasern (24, 28) umgibt,
- und wobei ein maximaler Koeffizient k, bei dem eine Gesamtverkleidungsfläche der Mittelbereiche (38, 44) der jeweiligen aktiven und passiven Pumpleitfasern (24, 28) reduziert werden kann, $k = [NA_{af}/NA_{pump}]^2$ ist, wobei $NA_{af} = [\sqrt{n_{clad}^2 - n_{coat}^2}]^2$ eine numerische Apertur der aktiven Faser (24) ist, wobei $n_{clad}$ und $n_{coat}$ Brechungsindizes der Verkleidung (42) bzw. der Beschichtung (26) der aktiven Faser (24) sind und $NA_{pump}$ eine numerische Apertur der Pumpemission ist.

2. Faserlasersystem nach Anspruch 1, wobei ein Ausgangsendbereich der Pumpleitfaser konfiguriert ist, N Mal mehr eines nichtabsorbierten Pumplichts als ein Ausgangsendbereich der aktiven Faser zu enthalten, wobei N ein Verhältnis zwischen einer Fläche eines Ausgangsendbereichs der Pumpleitfaser zu einer Verkleidungsfläche eines Ausgangsendbereichs der aktiven Faser ist.

3. Faserlaser nach Anspruch 2, weiter umfassend eine reflektierende Komponente, die mit dem Ausgangsendbereich der Pumpleitfaser gekoppelt ist, und eine Pumpeinheit, die das Pumplicht ausstrahlt, das in ein Eingangsende der Pumpleitfaser gekoppelt ist, wobei die reflektierende Komponente konfiguriert ist, das Pumplicht, das entlang der kürzest möglichen Länge der aktiven Faser nicht absorbiert ist, hin zum Eingangsendbereich der Pumpleitfaser zurück zu reflektieren, um das nichtabsorbierte Pumplicht wieder in den Mittelbereich der aktiven Faser einzuführen.

4. Faserlasersystem nach Anspruch 1, wobei die Gesamtverkleidungsfläche der Mittelbereiche und eine Gesamtfläche von Eingangsendbereichen jeweiliger aktiver und Pumpleitfasern im Wesentlichen gleich zueinander sind.

5. Faserlasersystem nach Anspruch 1, weiter umfassend eine andere hantelförmige Pumpleitfaser, die im Wesentlichen identisch mit der einen Pumpleitfaser konfiguriert ist und so liegt, dass die mittenreduzierten Bereiche der jeweiligen und anderen Pumpleitfasern sich axial gemeinsam mit dem Mittelkernabschnitt der aktiven Faser erstrecken und mit dem Mittelabschnitt in einer Ebene ausgerichtet sind, die sich quer zur Symmetrieachse erstreckt.

6. Faserlasersystem nach Anspruch 5, das weiter eine Pumplichtquelle umfasst, die das Pumplicht ausstrahlt, das in ein Eingangsende eines Bereichs der Pumpleitfasern gekoppelt ist, wobei Ausgangsbereiche jeweiliger Pumpleitfasern in einer Nähe eines Endes des Mittelkernbereichs, der axial vom Eingangsende der einen Pumpleitfaser beabstandet ist, zusammengeschmolzen sind, wobei die zusammengeschmolzenen Pumpleitfasern eine U-förmige Konfiguration definieren.

7. Faserlaser nach Anspruch 5, wobei die Pumplichtquelle zwei Pumpeinheiten hat, die jeweils das Pumplicht ausstrahlen, wobei die ausgestrahlten Pumplichter in jeweilige Eingangsbereiche der U-förmigen Pumpleitfaser gekoppelt sind, um sich in entgegengesetzte Richtungen auszubreiten.

8. Faserlasersystem nach Anspruch 1, weiter umfassend eine andere hantelförmige Pumpleitfaser, die im Wesentlichen identisch mit der einen Pumpleitfaser konfiguriert ist und so liegt, dass die mittigen Kleinflächenmittelbereiche jeweiliger Pumpleitfasern sich axial gemeinsam mit dem Mittelkernabschnitt mit vergrößerter Fläche der aktiven Faser erstrecken, wobei jeweilige aktive und Pumpleitfasern eine dreieckige Konfiguration in einer Ebene definieren, die sich quer zur Achse erstreckt.

9.  Faserlasersystem nach Anspruch 1, weiter umfassend einen anderen Wellenleiter, der ähnlich dem einen Wellenleiter konfiguriert ist, wobei Ausgangsend- und Eingangsendbereiche jeweiliger aktiver Fasern des einen und anderen Wellenleiters optisch miteinander gekoppelt sind und Ausgangsendbereiche der jeweiligen Pumpleitfasern optisch miteinander gekoppelt sind, sodass ein nichtabsorbiertes Pumplicht, das im Ausgangsbereich der Pumpleitfaser des einen Wellenleiters bleibt, zum Eingangsendbereich der Pumpleitfaser des anderen Wellenleiters geleitet wird, der das empfangene nichtabsorbierte Pumplicht in einen mittigen Kernabschnitt mit vergrößerter Fläche der aktiven Faser des anderen Wellenleiters einführt.

10. Faserlasersystem nach Anspruch 9, weiter umfassend:

- eine Lichtquelle, die Pumplicht erzeugt, das in die Pumpleitfaser des einen Wellenleiters gekoppelt ist, und
- eine reflektierende Komponente, die entlang eines Ausgangsendbereichs der Pumpleitfaser des anderen Wellenleiters liegt und betriebsfähig ist, nichtabsorbiertes Pumplicht, das im Ausgangsbereich der Pumpleitfaser des anderen Wellenleiters bleibt, zurück zu reflektieren.

11. Faserlasersystem nach Anspruch 9, weiter umfassend zwei Lichtquellen, die jeweilige Pumplichter erzeugen, die in jeweilige Pumpleitfasern des einen und anderen Wellenleiters gekoppelt sind, wobei das nichtabsorbierte Pumplicht, das im Ausgangsbereich von einem der Wellenleiter bleibt, betriebsfähig in das Eingangsende der Pumpleitfaser des anderen Wellenleiters gekoppelt ist, um das empfangene nichtabsorbierte Pumplicht in die aktive Faser des anderen Wellenleiters einzuführen.

12. Faserlasersystem nach Anspruch 11, weiter umfassend:

- einen optischen Filter, der zwischen den Ausgangs- und Eingangsendbereichen jeweiliger aktiver Fasern des einen und anderen Wellenleiters liegt, und
- einen optischen Wellenleiter, der das Signallicht zwischen den Ausgangs- und Eingangsendbereichen der jeweiligen aktiven Fasern durch den optischen Filter leitet, der konfiguriert ist, das Signallicht bei der Arbeitswellenlänge zwischen den Wellenleitern zu übertragen und im Wesentlichen weitere Ausbreitung des Signallichts bei der parasitären Wellenlänge zu blockieren.

13. Faserlasersystem nach Anspruch 12, wobei der optische Filter aus der Gruppe ausgewählt ist, bestehend aus einem langphasigen Fasergitter, geneigten Fasergitter, Faser mit einer erhöhten Konzentration von Samarium ($Sm^{3+}$), Faser mit einem W-Brechungsindexprofil und Massenoptik und einer Kombination dieser.

14. Faserlasersystem nach Anspruch 1, weiter umfassend einen Verstärkungsblock, der mit einer aktiven Yb-dotierten Faser bereitgestellt ist, wobei das Signallicht, das von der aktiven Faser des Wellenleiters ausgestrahlt wird, zum Pumpen der aktiven Yb-dotierten Faser des Verstärkungsblocks verwendet wird.

15. Faserlasersystem nach Anspruch 1, weiter umfassend einen nichtlinearen Kristall, der das Signallicht von der aktiven Faser des Wellenleiters empfängt und betriebsfähig ist, dessen Frequenz zu verdoppeln, um Licht vorrangig in einem 450-470 nm Bereich auszugeben.

16. Verfahren zum Konfigurieren eines Faserlasersystems nach Anspruch 1, umfassend:

(a) Ziehen einer aktiven Faser (24), die einen Kern (12), der mit einer Nd-Ionenkonzentration dotiert ist, und eine Verkleidung (42), die den Kern (12) umgibt, aufweist;
(b) gleichzeitig mit (a), Ziehen einer kernlosen passiven Pumpleitfaser (28);
(d) gleichzeitig mit (a) und (b), selektives Koppeln mittiger Spannen jeweiliger aktiver und passiver Pumpleitfasern (24, 28) miteinander, wodurch eine Struktur definiert wird, die aus Folgendem besteht:

- der aktiven Faser (24) mit dem Kern (12), der mit einem axialen doppelflaschenhalsförmigen Querschnitt konfiguriert ist, wobei der doppelflaschenhalsförmige Querschnitt einen Kernmittelbereich (38) aufweist, der von Kernendbereichen (36) flankiert ist, wobei eine Fläche der Kernmittelbereiche (38) größer als eine Fläche der Kernendbereiche (36) ist,
- und der passiven Pumpleitfaser (24, 28), die einen axial hantelförmigen Querschnitt aufweist, wobei der hantelförmige Querschnitt einen Mittelbereich (44) und beabstandete Endbereiche (40) aufweist, die den Mittelabschnitt (44) flankieren, wobei der Mittelbereich (44) der passiven Pumpleitfaser (28) mit einer Fläche konfiguriert ist, die kleiner als eine Fläche der beabstandeten Endbereiche (40) ist,

- wobei ein Verhältnis zwischen der Fläche des Mittelkern- (38) -bereichs und einer Gesamtverkleidungsfläche gekoppelter Spannen der jeweiligen Fasern (24, 28), die die aktive Faser bereitstellen, für die Nd-Ionenkonzentration eine kürzest mögliche Länge der aktiven Faser (24) erlauben, die eine gewünschte Verstärkung von Signallicht bei einer Arbeitswellenlänge bereitstellt und eine Verstärkung des Signallichts bei einer parasitären Wellenlänge auf einen voreingestellten Schwellenwert begrenzt,

- weiter umfassend die Schritte zum: Bereitstellen eines schützenden Fasermantels (26) über Verkleidungen (42) jeweiliger aktiver und passiver Pumpleitfasern (24, 28) entlang mindestens der gekoppelten Spannen, wobei Ziehen der Fasern ein Verringern einer Gesamtverkleidungsfläche der Mittelbereiche (38, 44) der jeweiligen aktiven und passiver Pumpleitfasern (24, 28) bei einem maximalen Koeffizienten $k=[NA_{af}/NA_{pump}]^2$ umfasst, wobei $NA_{af}=[\sqrt{n_{clad}^2-n_{coat}^2}]^2$ eine numerische Apertur der aktiven Faser ist, wobei $n_{clad}$ und $n_{coat}$ jeweilige Brechungsindizes der Verkleidung bzw. der Beschichtung der aktiven Faser sind und $NA_{pump}$ eine numerische Apertur der Pumpenemission ist.

**17.** Verfahren nach Anspruch 16, wobei Ziehen der Fasern weiter beinhaltet

- Bereitstellen eines von entgegengesetzten Endbereichen der Pumplichtleitfaser mit einem Bereich, der größer als eine Fläche eines sich gemeinsam erstreckenden Endbereichs der aktiven Faser ist, wodurch ein größerer Abschnitt des Pumplichts, der nicht im Mittelkernbereich absorbiert wird, in dem einen Endbereich der Pumpleitfaser gesammelt wird, und

- entweder Koppeln einer reflektierenden Komponente mit dem einen Endbereich der Pumplichtleitfaser, wodurch der nichtabsorbierte große Abschnitt des Pumplichts zurück zum anderen Endbereich der Pumpleitfaser geleitet wird, um den Mittelkernbereich erneut zu pumpen; oder Leiten des nichtabsorbierten großen Abschnitts des Pumplichts hin zu einem Eingangsendbereich einer zusätzlichen Pumpleitfaser, die von der einen Pumpleitfaser beabstandet und damit identisch strukturiert ist, wobei die zusätzliche Pumpleitfaser das nichtabsorbierte Pumplicht in einen Mittelkernbereich einer zusätzlichen aktiven Faser einführt, der identisch mit der einen aktiven Faser konfiguriert ist.

## Revendications

**1.** Système de laser à fibre comprenant au moins un guide d'ondes configuré avec :

- une fibre dopée au Nd active (24) et une fibre de délivrance à pompe passive sans noyau (28) connectées optiquement l'une à l'autre et s'étendant le long d'un axe substantiellement parallèle, les fibres actives et passives (24, 28) comportant des zones centrales respectives s'étendant axialement (38, 44) qui sont couplées l'une à l'autre pour définir une structure, la fibre active (24) étant pourvue d'un noyau (12) configuré avec une section transversale double axiale en forme de col de bouteille, la section transversale double axiale en forme de col de bouteille ayant sa zone centrale de noyau (38) flanquée par des zones terminales de noyau (36), une superficie de la zone terminale de noyau (38) étant supérieure à une superficie des zones terminales de noyau (36),

- et la fibre de délivrance à pompe passive (28) ayant une section transversale axiale en forme de sablier, la section transversale axiale en forme de sablier comportant la zone centrale (44) et des zones terminales espacées (40) qui flanquent la zone centrale (44), la zone centrale (44) de la fibre de délivrance à pompe passive (28) étant configurée avec une superficie inférieure à une superficie des zones terminales espacées (40),

- les zones centrales (38, 44) des fibres de délivrance respectives à pompe active et passive (24, 28) étant configurées pour assurer un taux d'absorption de lumière dans une section de noyau (12) s'étendant le long de la zone centrale (38) de la fibre active (24) tel que cette dernière ait une longueur la plus courte possible qui permette un gain désiré de lumière de signal à une longueur d'onde fonctionnelle tout en limitant un gain de la lumière de signal à une longueur d'onde parasitaire à un seuil préétabli, les ions de Nd étant introduits dans le noyau (12) a une concentration donnée sélectionnée pour conférer à la fibre active (24) le gain désiré à la longueur d'onde fonctionnelle et le gain préétabli à la longueur d'onde parasitaire,

- le système de laser à fibre comprenant en outre un revêtement de fibre protecteur (26) entourant les zones centrales (38, 44) des fibres de délivrance à pompe active et passive respectives (24, 28),

- et un coefficient maximum k auquel une superficie d'habillage totale des zones centrales (38, 44) des fibres de délivrance à pompe active et passive respectives (24, 28) peut être réduite est k=[$NA_{af}/NA_{pompe}$], sachant que $NA_{af}$=[$\sqrt{n_{habillage}^2-n_{revêtement}^2}$]$^2$ est une ouverture numérique de la fibre active (24), $n_{habillage}$ et $n_{revêtement}$ étant des indices respectifs de réfraction d'habillage (42) et de revêtement (26) de la fibre active (24) et que $NA_{pompe}$ est une ouverture numérique d'émission de pompe.

**2.** Système de laser à fibre selon la revendication 1, dans lequel une extrémité de sortie de la fibre de délivrance à pompe est configurée pour contenir N fois plus de lumière de pompe non absorbée qu'une zone terminale de sortie de la fibre active, N étant un rapport entre une superficie d'une zone terminale de sortie de la fibre de délivrance à pompe et une superficie d'habillage d'une zone terminale de sortie de la fibre active.

**3.** Système de laser à fibre selon la revendication 2, comprenant en outre un composant réflectif couplé à la zone terminale de sortie de la fibre de délivrance à pompe, et une unité de pompe irradiant la lumière de pompe couplée dans une extrémité d'entrée de la fibre de délivrance à pompe, le composant réflectif étant configuré pour réfléchir la lumière de pompe non absorbée le long de la longueur la plus courte possible de la fibre active vers la zone terminale d'entrée de la fibre de délivrance à pompe de manière à relancer la lumière de pompe non absorbée dans la zone centrale de la fibre active.

**4.** Système de laser à fibre selon la revendication 1, dans lequel la superficie d'habillage totale des zones centrales et une superficie totale des zones terminales d'entrée des fibres de délivrance active et à pompe respectives sont substantiellement égales.

**5.** Système de laser à fibre selon la revendication 1, comprenant en outre une autre fibre en forme de sablier de délivrance à pompe configurée substantiellement de manière identique à une des fibres de délivrance et située de manière à ce que les superficies réduites centrales de l'une et l'autre des fibres de délivrance à pompe respectives s'étendent axialement conjointement avec la section de noyau centrale de la fibre active et soient alignées avec la section centrale dans un plan qui s'étend transversalement à l'axe de symétrie.

**6.** Système de laser à fibre selon la revendication 5, comprenant en outre une source de lumière de pompe irradiant la lumière de pompe qui est couplée dans une extrémité d'entrée de la zone des fibres de délivrance à pompe, les zones de sortie des fibres de délivrance à pompe respectives étant fusionnées les unes aux autres à proximité d'une extrémité de la zone de noyau centrale axialement espacée de l'extrémité d'entrée de la fibre de délivrance à pompe, les fibres de délivrance à pompe fusionnées définissant une configuration en forme de U.

**7.** Système de laser à fibre selon la revendication 5, dans lequel la source de lumière de pompe comporte deux unités de pompe irradiant chacune la lumière de pompe, les lumières de pompe irradiées étant couplées dans des zones d'entrée respectives la de la fibre de délivrance à pompe en forme de U de manière à se propager dans des sens opposés.

**8.** Système de laser à fibre selon la revendication 1, comprenant en outre une autre fibre de délivrance à pompe en forme de sablier configurée substantiellement de manière une CHRS identique à la fibre de délivrance à pompe et située de manière à ce que les zones centrales de faible superficie des fibres de délivrance à pompe respectives s'étendent conjointement axialement avec la section de noyau centrale à superficie élargie de la fibre active, les fibres de délivrance active et à pompe respectives définissant une configuration triangulaire dans un plan qui s'étend transversalement à l'axe.

**9.** Système de laser à fibre selon la revendication 1, comprenant en outre un autre guide d'ondes configuré de manière similaire au guide d'ondes, les zones terminales de sortie et les zones terminale d'entrée des fibres actives respectives de l'un et l'autre guides d'ondes étant couplées optiquement les unes aux autres et les zones terminales de sortie des fibres de délivrance à pompe respective étant couplées optiquement les unes aux autres de manière à ce qu'une lumière de pompe non absorbée restant dans la zone de sortie de la fibre de délivrance à pompe d'un des guides d'ondes soit guidée vers la zone terminale d'entrée de la fibre de délivrance à pompe de l'autre guide d'ondes qui lance la lumière de pompe non absorbée reçue dans une section de noyau centrale de superficie élargie de la fibre active de l'autre guide d'ondes.

**10.** Système de laser à fibre selon la revendication 9, comprenant en outre :

- une source de lumière générant la lumière de pompe qui est couplée dans la fibre de délivrance à pompe d'un des guides d'ondes, et
- un composant réflectif situé le long d'une zone terminale de sortie de la fibre de délivrance à pompe de l'autre guide d'ondes et opérationnel pour réfléchir la lumière de pompe non absorbée restant dans la zone de sortie de la fibre de délivrance à pompe de l'autre guide d'ondes.

**11.** Système de laser à fibre selon la revendication 9, comprenant en outre deux sources de lumière générant des lumières de pompe respectives couplées dans des fibres de délivrance à pompe respectives de l'un et l'autre guides d'ondes, la lumière de pompe non absorbée restant dans la zone de sortie d'un des guides d'ondes étant couplée fonctionnellement dans l'extrémité d'entrée de la fibre de délivrance à pompe de l'autre guide d'ondes pour lancer la lumière non absorbée reçue dans la fibre active de l'autre guide d'ondes.

**12.** Système de laser à fibre selon la revendication 11, comprenant en outre :

    - un filtre optique situé entre les zones terminales de sortie et d'entrée des fibres actives respectives de l'un et l'autre guides d'ondes, et
    - un guide d'ondes optiques guidant la lumière de signal entre les zones terminales de sortie des fibres actives respectives à travers le filtre optique qui est configuré pour transmettre la lumière de signal à la longueur d'onde fonctionnelle entre les guides d'ondes et bloquer substantiellement la poursuite de la propagation de la lumière de signal à la longueur d'onde parasitaire.

**13.** Système de laser à fibre selon la revendication 12, dans lequel le filtre optique est sélectionné dans le groupe composé d'un réseau de fibres à période longue, d'un réseau de fibres inclinées, d'une fibre ayant une concentration accrue de samarium ($Sm^{3+}$), d'une fibre ayant un profil d'indice de réfraction W et d'une optique en volume et de leurs combinaisons.

**14.** Système de laser à fibre selon la revendication 1, comprenant en outre un bloc de gain pourvu d'une fibre active dopée à l'Yb, la lumière de signal irradiée par la fibre active du guide d'ondes étant utilisée pour pomper la fibre active dopée à l'Yb du bloc de gain.

**15.** Système de laser à fibre selon la revendication 1, comprenant en outre un cristal non linéaire recevant la lumière de signal en provenance de la fibre active du guide d'ondes et opérationnel pour doubler sa fréquence de manière à émettre de la lumière majoritairement dans une plage de 450 à 470 nm.

**16.** Procédé de configuration d'un système de laser à fibre selon la revendication 1, comprenant :

    (a) l'étirage d'une fibre active (24) dotée d'un noyau (12) qui est dopée avec une concentration d'ions de Nd, et d'un habillage (42) entourant le noyau (12) ;
(b) simultanément à (a), l'étirage d'une fibre de délivrance à pompe passive sans noyau (28) ;
(d) simultanément à (a) et (b), le couplage sélectif d'étirements centraux de fibres de délivrance à pompe active et passive respectives (24, 28) les unes aux autres en définissant ainsi une structure composée de :

    - la fibre active (24) avec le noyau (12) configuré avec une double section transversale axiale en forme de sablier, la double section transversale axiale en forme de sablier ayant une zone centrale de noyau (38) flanquée par des zones terminales de noyau (36), une superficie des zones centrales de noyau (38) étant supérieure à une superficie des zones terminales de noyau (36),
    - et la fibre de délivrance à pompe passive (24, 28) ayant une section transversale axiale en forme de sablier, la section transversale en forme de sablier comportant une zone centrale (44) et des zones terminales espacées (40) qui flanquent la zone centrale (44), la zone centrale (44) de la fibre de délivrance à pompe passive (28) étant configurée avec une superficie inférieure à une superficie des zones terminales espacées (40),
    - un rapport entre la superficie de la zone de noyau centrale (38) et une superficie totale d'habillage d'étirement couplés des fibres respectives (24, 28) créant la fibre active pour que la concentration en ions de Nd permette une longueur la plus courte possible de la fibre active (24), ce qui procure un gain désiré de lumière de signal à une longueur d'onde fonctionnelle et limite un gain de la lumière de signal à une longueur d'onde parasitaire à un seuil préétabli,
    - comprenant en outre les étapes suivantes :
prévision d'un manchon en fibre protecteur (26) sur les habillages (42) des fibres de délivrance à pompe active et passive respectives (24, 28) le long au moins des étirements couplés, l'étirage des fibres incluant la réduction d'une superficie d'habillage totale des zones centrales (38, 44) des fibres de délivrance à pompe active et passive respectives (24, 28) à un coefficient maximal $k=[NA_{af}/NA_{pompe}]$, sachant que $NA_{af}=[\sqrt{n_{habillage}^2-n_{revêtement}^2}]^2$ est une ouverture numérique de la fibre active, $n_{habillage}$ et n$_{revêtement}$ étant des indices respectifs de réfraction d'habillage et de revêtement de la fibre active et que NA$_{pompe}$ est une ouverture numérique d'émission de pompe.

**17.** Procédé selon la revendication 16, dans lequel l'étirage des fibres inclut en outre

- la prévision d'une des zones terminales opposées de la fibre de délivrance de lumière de pompe avec une superficie supérieure à une superficie de la zone terminale s'étendant conjointement de la fibre active, en collectant ainsi une plus grande partie de la lumière de pompe qui n'est pas absorbée dans la zone de noyau centrale, dans une des zones terminales de la fibre de délivrance à pompe, et
- soit le couplage d'un composant réflectif à l'une des zones terminales de la fibre de délivrance de lumière de pompe, en guidant ainsi la grande partie non absorbée de la lumière de pompe en retour vers l'autre zone terminale de la fibre de délivrance à pompe de manière à repomper la zone de noyau centrale ; soit le guidage de la grande partie non absorbée de la lumière de pompe vers une zone terminale d'entrée d'une fibre de délivrance à pompe supplémentaire qui est espacée de et structuré de manière identique à la fibre de délivrance à pompe, la fibre de délivrance à pompe supplémentaire lançant la lumière de pompe non absorbée dans une zone de noyau centrale d'une fibre active supplémentaire configurée de manière identique à la fibre active.

FIG. 1

FIG. 2

FIG. 3

FIG. 4

FIG. 4A

FIG. 4B

FIG. 5

seed — $\lambda_1$ — 66 — 68

64

62   25

63

65

Pinput

78

$\lambda_1$   72

70

74

76

75

84

82

Light source

90

kPinput

80

78

78

86

88

85

FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040196537 A1